# FASCICULE DE BREVET EUROPEEN

(11) **EP 1 467 835 B1**
(45) Date de publication et mention de la délivrance du brevet: **23.08.2006**
(21) Numéro de dépôt: 02805381.7
(22) Date de dépôt: 13.12.2002
(51) Int. Cl.: B23K 37/04

(54) **Structure pour le maintien d'une pièce de carrosserie**
Strukture für das Halten eines Karosserieteiles
Struture for the maintaining of a car body part

(30) Priorité: 21.12.2001 FR 0116693
(43) Date de publication de la demande: 20.10.2004
(73) Titulaire: ABB MC, 95310 Saint Ouen l'Aumône (FR)
(72) Inventeur: DEMIT, Daniel, F-92400 Courbevoie (FR); MALATIER, François, F-95150 Taverny (FR)
(74) Mandataire: Lavialle, Bruno François Stéphane
(86) Numéro de dépôt international: PCT/FR2002/004340
(87) Numéro de publication internationale: WO 2003/053629

(56) Documents cités:
- DE-U- 7 927 493
- US-A- 3 510 118
- US-A- 5 343 611
- US-A- 5 409 158

## Description

La présente invention concerne une structure pour le maintien de pièces de carrosserie conformément au préambule de la revendication 1 (voir, par example US-A-5 343 611) et un gabarit de perçage.

Dans les lignes d'assemblage de carrosseries d'automobiles, on assure la mise en géométrie des sous-ensembles (tels que le soubassement, les côtés de caisse, la jupe arrière...) les uns par rapport aux autres et par rapport aux robots de soudure. Les pièces de carrosserie étant par nature déformables lorsqu'elles sont soumises à des contraintes, les outillages utilisés pour réaliser une carrosserie de géométrie déterminée et reproductible ont une double fonction : d'abord constituer une armature pour chacun des sous-ensembles déformables afin de les rigidifier pour permettre leur manipulation par des robots de manutention et ensuite constituer une interface stable permettant une mise en position précise dans un référentiel fixe qui est celui des robots de soudure.

Ces outils sont généralement constitués d'une structure de maintien de la pièce de carrosserie, qui comprend des membrures assemblées les unes aux autres et des éléments auxiliaires solidaires des membrures et destinés à assurer par exemple le positionnement de la pièce dans la structure, le maintien de la pièce dans la structure, le positionnement de la structure par rapport à une autre structure, la liaison au robot de manutention...

Ces membrures sont formées de poutres réalisées à partir de profilés métalliques dont les longueurs sont déterminées en fonction des dimensions de la pièce à maintenir. Avec les profilés utilisés, il est difficile d'avoir des poutres suffisamment rigides et légères pour cette utilisation.

L'assemblage des poutres entre elles et des éléments auxiliaires est le plus couramment réalisé par soudage. Il en résulte une fabrication relativement longue et délicate compte tenu des déformations provoquées par le soudage, et la fabrication nécessite de plus du personnel spécialisé. Les réparations et l'adjonction d'éléments auxiliaires doivent en outre être réalisées par du personnel spécialisé et avec le plus grand soin afin de ne pas altérer la géométrie de la structure. Pour limiter les déformations, il est d'usage de recourir à des poutres et des éléments auxiliaires de forte épaisseur au détriment de la légèreté.

Il est également possible de réaliser un assemblage boulonné. Il est toutefois difficile de positionner les différentes poutres et les éléments auxiliaires les uns par rapport aux autres préalablement à l'assemblage. L'assemblage ainsi réalisé n'est en général pas suffisamment rigide. En outre, les poutres doivent avoir une épaisseur relativement importante pour permettre un enfoncement suffisant des vis de fixation, de sorte que les poutres sont relativement lourdes.

Or, le poids des outils est un paramètre important qui conditionne le dimensionnement des robots destinés à les manipuler, et influe sur le coût de ces derniers.

Selon l'invention, on prévoit, une structure pour le maintien d'une pièce de carrosserie conformément à la revendication 1.

Ainsi, la cannelure peut être utilisée comme moyen de rigidification de la poutre en flexion, repère de positionnement angulaire d'un élément fixé sur la poutre, moyen de blocage en rotation d'un élément fixé sur la poutre, zone d'ancrage d'une vis (la cannelure formant localement une surépaisseur permettant l'engagement d'une vis sur une profondeur suffisante tout en permettant de conserver une masse relativement faible). Il est ainsi possible d'obtenir une structure relativement légère, robuste et rigide, et de mise en oeuvre facile.

De préférence, la poutre tubulaire comporte une pluralité de cannelures réparties angulairement de façon régulière autour de la poutre et présente une section sensiblement circulaire et symétrique par rapport à au moins un diamètre de celle-ci.

Les possibilités de fixation et d'orientation des poutres et des éléments destinés à être fixés sur celles-ci sont alors multipliées.

Selon l'invention (voiv revendication 1), la structure comporte au moins un élément auxiliaire pourvu de moyens de sa fixation à la poutre et ces moyens comprennent une face d'appui contre la face de référence et des moyens d'application de la face d'appui contre la face de référence, la face d'appui étant de préférence formée par une paroi latérale d'une rainure ménagée dans l'élément auxiliaire pour recevoir la cannelure et les moyens d'application comprenant au moins un dispositif de coincement destiné à être introduit entre le flanc de la cannelure opposé à la face de référence et la paroi latérale de la rainure en regard.

Le positionnement de l'élément auxiliaire par rapport à la poutre est alors assuré de manière efficace et ferme.

Avantageusement encore, le dispositif de coincement comporte une cale et au moins une clavette à pente disposée pour que la pente de la clavette coopère avec une rampe correspondante de la cale et que la cale et la clavette présentent deux faces opposées parallèles destinées à prendre appui pour l'une sur le flanc de la cannelure opposé à la face de référence et pour l'autre sur la paroi latérale de la rainure en regard, la clavette étant montée pour coulisser par rapport à la cale et le dispositif de coincement comportant des moyens de réglage de la clavette en position par rapport à la cale.

Ce mode d'application de la face d'appui sur la face de référence est alors particulièrement simple et efficace.

L'invention a également pour objet un gabarit de perçage pour une poutre d'une telle structure de maintien selon la revendication 10.

Des perçages et des taraudages peuvent par ce moyen être réalisés de façon très précise dans chaque cannelure de la poutre afin de permettre la fixation ultérieure sur celle-ci de poutres et/ou d'éléments.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue partielle en perspective d'une première structure conforme à l'invention,
- la figure 2 est une vue de côté de cette structure,
- la figure 3 est une section selon le plan III de la figure 1,
- la figure 4 est une section selon le plan IV de la figure 1,
- la figure 5 est une vue partielle en perspective d'une deuxième structure conforme à l'invention,
- la figure 6 est une vue partielle en coupe selon le plan VI de la figure 5 de cette structure,
- la figure 7 et une vue en perspective d'un gabarit de perçage d'une poutre de la structure de la figure 1,
- la figure 8 est une section de ce gabarit en position sur cette poutre.

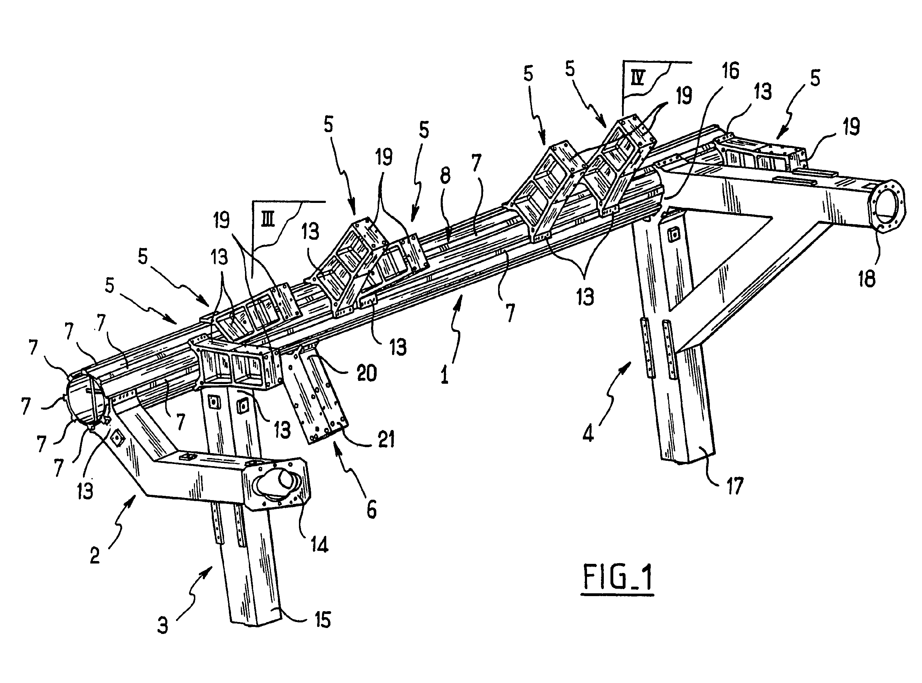

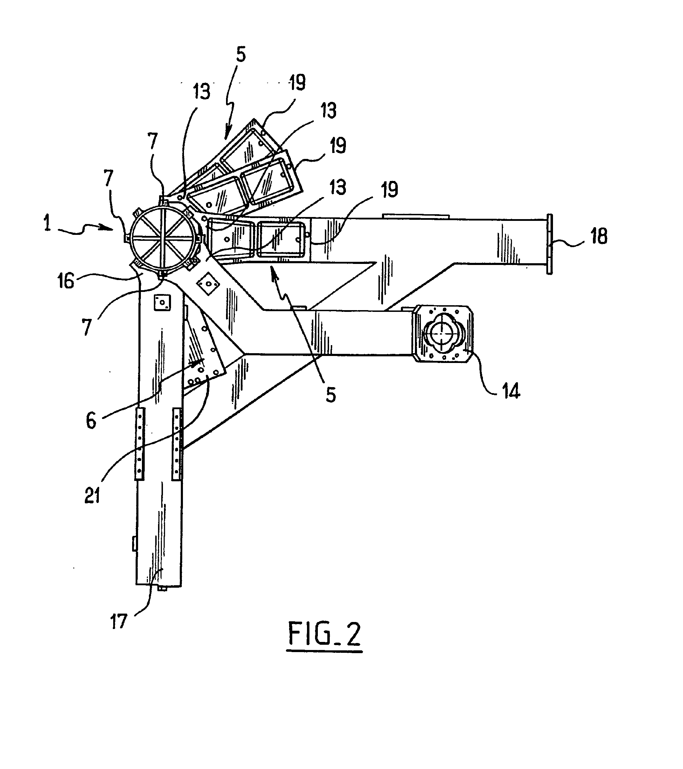

L'invention est ici décrite dans une application de manipulation d'une pièce de carrosserie non représentée, par exemple dans une ligne d'assemblage de carrosseries de véhicules automobiles. En particulier, la structure des figures 1 à 4 est destinée à former un outil latéral de manipulation d'un côté de caisse gauche, cet outil étant agencé pour notamment coopérer avec un deuxième outil latéral de manipulation du côté de caisse droit et un outil arrière de manipulation de la jupe arrière de la carrosserie.

Une structure de maintien complète peut comprendre plusieurs poutres assemblées les unes aux autres au moyen d'éléments auxiliaires de liaison fixés aux poutres pour maintenir entre celles-ci des angles et des positions prédéterminés et, également fixés sur les poutres, des éléments auxiliaires de positionnement de la pièce de carrosserie dans la structure, des éléments auxiliaires de maintien de la pièce de carrosserie ainsi positionné, des éléments auxiliaires de fixation de la structure à un bras d'un robot de manutention, des éléments auxiliaires de positionnement de la structure dans la ligne d'assemblage ou par rapport à d'autres structures, des éléments auxiliaires de fixation amovible à ces autres structures... La structure de maintien n'est pas représentée en totalité sur les figures, seuls une ou quelques poutres et quelques éléments auxiliaires figurant sur les dessins afin d'illustrer quelques configurations caractéristiques possibles.

En référence aux figures 1 à 4, la première structure de maintien conforme à l'invention comprend une poutre généralement désignée en 1 et des éléments auxiliaires généralement désignés en 2, 3, 4, 5 et 6.

La poutre 1 est tubulaire de section circulaire et est pourvue de cannelures 7 qui s'étendent le long de la surface externe 8 de la poutre 1. Les cannelures 7 sont ici rapportées par soudage sur la surface externe 8 de la poutre 1 mais les cannelures 7 peuvent être réalisées en une seule pièce avec la poutre 1 par exemple par extrusion. Les cannelures 7 sont au nombre de huit et sont disposées à 45° les unes des autres. La poutre 1 est ainsi symétrique.

Chaque cannelure 7 comporte deux flancs 9, 10 sensiblement parallèles et une face supérieure 11. Certaines des cannelures, référencées 7' pour le distinguer des autres, comporte un flanc 9' qui a été usiné de façon précise pour constituer une surface de référence. La poutre 1 peut ne comprendre qu'une seule cannelure 7'.

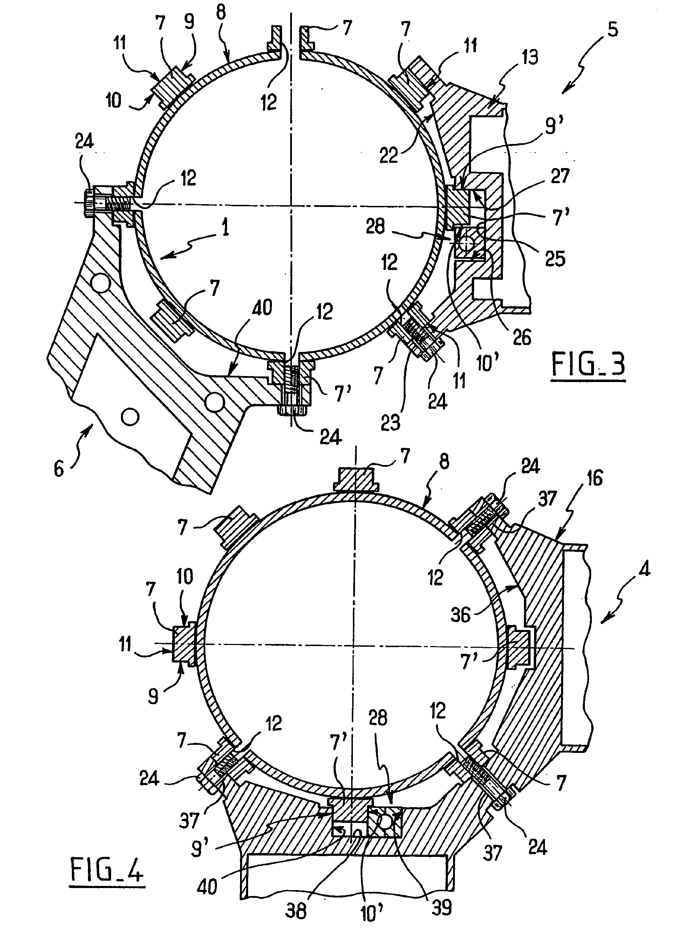

Des taraudages 12 visibles sur les figures 3 et 4 et un trou de réception d'une goupille sont ménagés selon une direction radiale de la poutre 1 depuis les faces supérieures 11 dans les cannelures 7.

L'élément auxiliaire 2 comporte une extrémité pourvue de moyens 13 (qui seront décrits ci-après) de sa fixation amovible sur la poutre 1 et une extrémité opposée pourvue d'un vé femelle 14 destiné à coopérer avec un vé mâle de la structure de l'outil arrière pour assurer le positionnement relatif des deux structures.

Les éléments auxiliaires 5 comportent une extrémité pourvue de moyens 13 de leur fixation amovible sur la poutre 1 et une extrémité opposée 19 agencée pour permettre la fixation soit d'organes de positionnement et/ou de maintien de la pièce de carrosserie soit de positionnement de la structure. Ces organes sont par exemple des moyens de serrage, des doigts ou des plots de positionnement ou d'indexation...

Les moyens 13 comprennent une semelle 22 pour prendre appui sur deux cannelures 7 disposées à 90° l'une de l'autre de part et d'autre d'une cannelure 7'. La semelle 22 comporte des trous 23 recevant avec un jeu transversal des vis de fixation 24 engagées dans les taraudages 12 des cannelures 7 et un trou dans lequel est engagée une goupille non visible sur les figures et reçue dans le trou ménagé à cet effet dans les cannelures. Une rainure 25 est ménagée dans la semelle 22 pour recevoir la cannelure 7'. La rainure 25 est délimitée latéralement par des parois 26, 27 espacées d'une distance supérieure à celle séparant les flancs 9' et 10' de la cannelure 7'. La paroi 27 est usinée pour former une surface de référence pour le positionnement de l'élément auxiliaire en coopérant avec le flanc 9'.

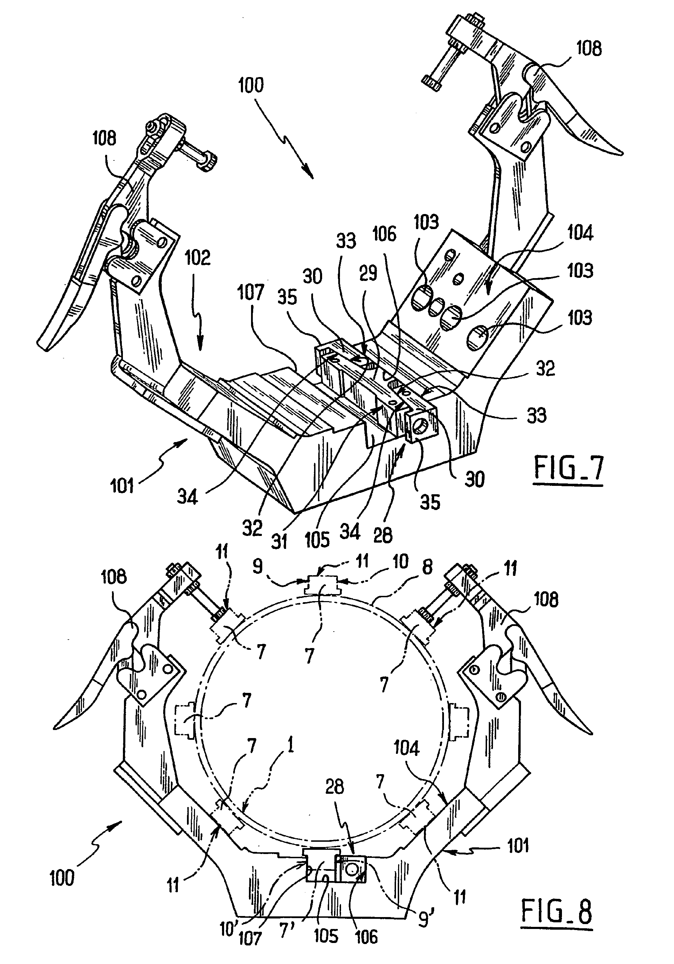

Un dispositif de coincement généralement désigné en 28 est logé entre le flanc 10' et la paroi 26 en regard. Le dispositif de coincement 28 (mieux visible sur la figure 7, monté sur le gabarit de perçage) comprend une cale 29 et deux clavettes 30. La cale 29 comprend une semelle 31 et à l'opposé deux rampes 32 disposées de telle manière que ces surfaces forment un triangle. Chaque clavette 30 comprend une semelle 33 et à l'opposé une pente 34, ainsi qu'un talon 35 du côté de la partie la plus épaisse de la clavette 30. Les clavettes 30 sont disposées pour que les pentes 34 coopèrent avec les rampes 32 correspondantes et que les semelles 31, 33 prennent appui pour l'une sur le flanc 10' et pour l'autre sur la paroi 26 en regard, les talons 35 formant un retour qui s'étend au-delà de la cale 29 en regard des extrémités de celle-ci. Une vis non représentée est montée pour pivoter dans les talons 35 et est engagée dans un taraudage ménagé dans l'extrémité correspondante de la cale 29 pour permettre de déplacer les clavettes 30 selon un mouvement de coulissement par rapport à la cale 29 et ainsi écarter plus ou moins les semelles 31, 33 (les clavettes 30 sont donc réglables en position par rapport à la cale 29). Le dispositif de coincement permet de la sorte d'appliquer fermement la paroi 27 contre le flanc 9'. Le positionnement angulaire de l'élément auxiliaire est précis et est maintenu même lorsque des efforts importants sont exercés sur cet élément. Du fait du jeu existant entre la semelle 22 et les vis de fixation 24, lesdites vis ne s'opposent pas à la mise en position de l'élément. La goupille assure le positionnement selon une direction parallèle à la cannelure.

L'élément auxiliaire 3 est une jambe qui possède une extrémité pourvue de moyens 13 de sa fixation amovible sur la poutre 1 (ces moyens étant identiques à ceux précédemment décrits) et une extrémité opposée 15 agencée pour prendre appui sur le sol ou pour coopérer avec une autre poutre 1 par des moyens non représentés du type des moyens 13.

L'élément auxiliaire 4 est une équerre dont le sommet est pourvu de moyens 16 de sa fixation amovible à la poutre 1 et dont une première branche a une extrémité libre 17 agencée pour prendre appui sur le sol ou pour coopérer avec une autre poutre 1 par des moyens non représentés du type des moyens 13 et une seconde branche a une extrémité libre 18 agencée pour prendre appui et être fixée à une équerre correspondante solidaire de la structure de l'outil latéral droit.

Les moyens 16 comprennent une semelle 36 s'étend sur 180° pour prendre appui sur trois cannelures 7 disposées à 90° l'une de l'autre, deux de ces cannelures 7 s'étendant de part et d'autre de la cannelure 7'. La semelle 36 comporte des trous 37 recevant avec un jeu transversal des vis de fixation 24 engagées dans les taraudages 12 des cannelures 7. Une rainure 38 est ménagée dans la semelle 36 pour recevoir la cannelure 7'. La rainure 38 est délimitée latéralement par des parois 39, 40 espacées d'une distance supérieure à celle séparant les flancs 9' et 10' de la cannelure 7', la paroi 40 étant usinée pour former une surface d'appui sur le flanc 9'.

Un dispositif de coincement 28 identique à celui précédemment décrit est logé entre le flanc 10' et la paroi 39 en regard.

L'élément auxiliaire 6 comporte une extrémité pourvue de moyens 20 de sa fixation amovible sur la poutre 1 et une extrémité opposée 21 agencée pour permettre la fixation soit d'organes de positionnement et/ou de maintien de la pièce de carrosserie soit de positionnement de la structure.

Les moyens 20 comprennent une semelle 40 pour prendre appui sur la face supérieure 11 de deux cannelures 7 à 90° l'une de l'autre, une goupille non visible introduite dans des perçages radiaux correspondants de la semelle et de la cannelure pour assurer principalement le positionnement longitudinal de l'élément auxiliaire le long de la poutre et des vis de fixation 24 engagées au travers de la semelle 40 dans les taraudages 12 des cannelures 7. Cet élément n'est pas destiné à subir des efforts importants de sorte qu'il n'est pas nécessaire de prévoir de moyens particuliers de son blocage en position autres que les vis de fixation engagés dans les taraudages 12.

La structure ainsi réalisée est totalement modulaire, les poutres 1 et les éléments auxiliaires 2, 3, 4, 5 et 6 étant facilement assemblables et démontables. En outre, cette structure est rigide, relativement légère et facilement réparable, les constituants qui auraient été détériorés pouvant être rapidement changés.

On remarquera que, lorsque deux éléments auxiliaires ont une semelle qui s'étend sur moins de 180° (c'est-à-dire ici qui chevauche au plus quatre cannelures), ces deux éléments auxiliaires peuvent être disposés dans un même plan transversal de la poutre (voir par exemple la figure 3).

De préférence, les perçages réalisés dans les éléments auxiliaires 2, 3, 4, 5, 6 sont tous espacés de la même distance. Ceci permet de pouvoir facilement implanter un élément auxiliaire entre des éléments auxiliaires déjà montés sur la poutre et augmente la modularité.

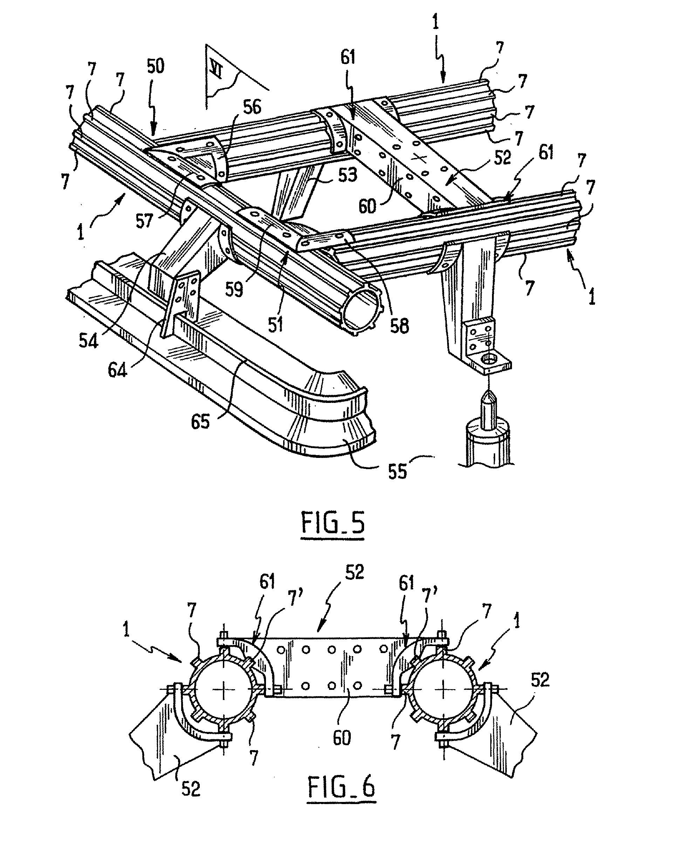

En référence aux figures 5 et 6, la deuxième structure de maintien conforme à l'invention comprend trois poutres 1 en tout point identique à celle précédemment décrite, des éléments auxiliaires généralement désignés en 50, 51, 52 destinés à relier rigidement les poutres 1 entre elles et des éléments auxiliaires généralement désignés en 53, 54 destinés à assurer le positionnement de la structure par rapport à un bâti 55.

Les éléments auxiliaires 50, 51 sont agencés pour fixer deux poutres 1 l'une à l'autre de telle manière qu'elles forment un angle de 90°. Chaque élément auxiliaire 50, 51 comprend respectivement deux semelles 56, 57 et 58, 59 pour prendre appui sur deux cannelures 7 disposées à 90° l'une de l'autre de part et d'autre d'une cannelure 7 ayant un flanc de référence. Les semelles 56, 57 et 58, 59 et les moyens de fixation associés sont identiques aux moyens de fixation 13 et à la semelle 12 précédemment décrits. Les semelles 56, 57 et 58, 59 s'étendent selon des directions formant un angle de 90° entre elles.

L'élément auxiliaire 52 comprend un bras 60 pourvu à chacune de ses extrémités de moyens 61 de sa fixation amovible sur deux des poutres 1 pour maintenir celles-ci parallèles l'une à l'autre. Les moyens 61 sont identiques aux moyens de fixation 13.

Les éléments auxiliaires 53 sont identiques à l'élément auxiliaire 6 et sont fixés chacun à une des poutres 1 parallèles de la même façon que l'élément auxiliaire 6. Les éléments auxiliaires 53 ont une extrémité libre pourvue d'un logement 62 pour recevoir un pilote 63 solidaire du bâti 55. Les éléments auxiliaires 52 et 53 s'étendent sensiblement dans un même plan transversal de la poutre 1.

L'élément auxiliaire 54 est identique à l'élément auxiliaire 6 et est fixé de la même manière à une des poutres 1. L'élément auxiliaire 54 a une extrémité libre pourvue d'une fourchette 64 pour coulisser le long d'un rail 65 solidaire du bâti 55.

Les taraudages 12 et le perçage pour la goupille sont réalisés dans les cannelures 7 au moyen du gabarit de perçage représenté aux figures 7 et 8 et généralement désigné en 100 sur ces figures.

Le gabarit 100 comprend un corps 101 pourvu de moyens 102 de sa fixation amovible sur la poutre 1 et de canons de perçage 103 disposés pour s'étendre à l'aplomb d'une cannelure à percer lorsque le gabarit est en position sur la poutre 1.

Les moyens 102 comprennent une semelle 104 pour prendre appui sur la face supérieure 11 de deux cannelures 7 à percer disposées à 90° l'une de l'autre.de part et d'autre d'une autre cannelure 7 utilisée pour le positionnement du gabarit 100. Une rainure 105 est ménagée dans la semelle 104 pour recevoir cette cannelure 7. La rainure 105 est délimitée latéralement par des parois 106, 107 espacées d'une distance supérieure à celle séparant les flancs 9 et 10 de la cannelure 7. La paroi 107 est usinée pour former une surface de référence pour le positionnement angulaire de l'élément auxiliaire 2 en coopérant avec le flanc 9 de la cannelure 7 utilisé pour le positionnement. Un dispositif de coincement 28 identique aux précédents est logé entre le flanc 10 et la paroi 106 en regard.

Les moyens 102 comprennent en outre des moyens de serrage 108, de type « sauterelle », destinés à prendre appui sur la face supérieure 11 de deux cannelures 7 opposées aux cannelures 7 à percer pour appliquer la semelle 104 sur la face supérieure 11 des deux cannelures 7 à percer. D'autres moyens de serrage sont utilisables.

Le gabarit 100 est mis en place sur une cannelure 7 et est positionné le long de celle-ci en utilisant un moyen de positionnement. Ce moyen de positionnement peut simplement consister en la mesure d'une distance à partir d'un point de référence prédéterminé de la poutre ou en un gabarit de positionnement longitudinal.

Lorsque le gabarit 100 est en position, les canons de perçages 103 s'étendent à l'aplomb des cannelures 7 à percer.

Le gabarit 100 peut être agencé pour permettre le perçage de plus de deux cannelures 7 et éventuellement être réalisé en deux parties pour permettre le perçage de toutes les cannelures.

On notera que la cannelure retenue pour le positionnement du gabarit 100 sur la poutre 1 est de préférence une cannelure 7' de manière à utiliser le flanc 9' de celle-ci afin d'assurer un positionnement précis du gabarit. Des canons de perçage peuvent par ailleurs être prévus pour le perçage de la ou des cannelures utilisées pour le positionnement.

Bien entendu, l'invention n'est pas limitée aux modes de réalisation qui viennent d'être décrits, mais englobe au contraire toute variante reprenant, avec des moyens équivalents, les caractéristiques essentielles énoncées plus haut.

En particulier, le nombre de cannelures et l'agencement de celles-ci peuvent être différents de ceux représentés, la poutre 1 peut ne pas être symétrique ou seulement selon un de ces diamètres.

En outre, d'autres moyens que le dispositif de coincement décrit peuvent être utilisés pour appliquer la paroi de référence de la rainure contre le flanc de référence 9' de la cannelure 7', et par exemple un dispositif de serrage à excentrique.

Par ailleurs, la poutre 1 peut comporter plusieurs cannelures 7' ayant un flanc 9' agencé pour former une référence de positionnement.

Des moyens de serrage par exemple analogues à ceux du gabarit 100 peuvent également être utilisés pour la fixation des éléments auxiliaires aux poutres. Les éléments auxiliaires peuvent aussi ne prendre appui que sur une cannelure.

## Revendications

1. Structure pour le maintien d'une pièce de carrosserie, cette structure étant formée de membrures assemblées et d'au moins un élément auxiliaire (2, 3, 4, 5), **caractérisée en ce que** l'une au moins des membrures est une poutre (1) tubulaire pourvue extérieurement d'au moins une cannelure (7) s'étendant longitudinalement et comportant au moins un flanc (9') agencé pour constituer une référence de positionnement pour l'élément auxiliaire (2, 3, 4, 5), l'élément auxiliaire ayant une semelle (22, 36) pourvue de moyens (13, 16, 24) sa fixation à la poutre, ces moyens comprenant une face pour d'appui (27, 40) contre le flanc de référence (9') et des moyens d'application (28) de la face d'appui contre le flanc de référence.

2. Structure selon la revendication 1, **caractérisée en ce que** la poutre (1) comporte une pluralité de cannelures (7) réparties angulairement de façon régulière autour de la poutre.

3. Structure selon la revendication 2, **caractérisée en ce que** la poutre (1) présente une section sensiblement circulaire et symétrique par rapport à au moins un diamètre de celle-ci.

4. Structure selon la revendication 1, **caractérisée en ce que** la face d'appui est formée par une paroi (27, 40) latérale d'une rainure (25, 38) ménagée dans l'élément auxiliaire(2, 3, 4, 5) pour recevoir la cannelure et **en ce que** les moyens d'application comprennent au moins un dispositif de coincement (28) destiné à être introduit entre le flanc (10') de la cannelure (7') opposé au flanc de référence (9') et la paroi latérale (26, 39) de la rainure (27, 40) en regard.

5. Structure selon la revendication 4, **caractérisé en ce que** le dispositif de coincement (28) comporte une cale (29) et au moins une clavette (30) à pente disposée pour que la pente (34) de la clavette coopère avec une rampe (32) correspondante de la cale et que la cale et la clavette présentent deux faces (31, 33) opposées parallèles destinées à prendre appui pour l'une sur le flanc (10) de la cannelure (7) opposé au flanc de référence (9') et pour l'autre sur la paroi latérale (26, 39) de la rainure (25, 38) en regard, la clavette étant montée pour coulisser par rapport à la cale et le dispositif de coincement comportant des moyens de réglage de la clavette en position par rapport à la cale.

6. Structure selon l'une quelconque des revendications 1 à 5, **caractérisée en ce que** les moyens de fixation comprennent au moins une vis (24) destinée à être engagée dans un taraudage (12) ménagé dans la cannelure (7) selon une direction radiale de la poutre.

7. Structure selon l'une quelconque des revendications 1 à 6, **caractérisée en ce que**, la poutre (1) comportant plusieurs cannelures (7), la semelle (22, 36, 40) de l'élément auxiliaire est en appui sur au moins deux cannelures.

8. Structure selon la revendication 7, **caractérisée en ce que** la semelle (22, 36, 40) s'étend sur un angle d'au plus 180°.

9. Structure selon l'une quelconque des revendications 1 à 8, **caractérisée en ce que** l'élément auxiliaire est agencé pour relier deux poutres (1) l'une à l'autre selon un angle prédéterminé.

10. Gabarit de perçage (100) pour une poutre (1) d'une structure de maintien selon l'une quelconque des revendications précédentes, lequel comprend un corps (101) pourvu de moyens de sa fixation amovible (100, 104) sur la poutre (1) et d'au moins un canon (103) de perçage agencé pour s'étendre à l'aplomb d'une cannelure (7) de la poutre (1) lorsque le gabarit est en position sur la poutre, en ce que ces moyens comprennent une rainure (105) qui est ménagée dans le corps et qui possède une première paroi latérale (107) formant une face d'appui contre un flanc (9) de référence de la cannelure (7), des moyens d'application de la face d'appui contre le flanc de référence qui comprennent un dispositif de coincement reçu entre un second flanc (10) de la cannelure et une seconde paroi latérale (106) de la rainure en regard.

11. Gabarit selon la revendication 10, **caractérisé en ce que** le dispositif de coincement comporte une cale (29) et au moins une clavette (30) à pente disposée pour que la pente (34) de la clavette coopère avec une rampe (32) correspondante de la cale et que la cale et la clavette présentent deux faces (31, 33) opposées parallèles destinées à prendre appui pour l'une sur le second flanc (10) de la cannelure (7) et pour l'autre sur la seconde paroi latérale (106) de la rainure (105), la clavette étant montée pour coulisser par rapport à la cale et l'organe de coincement comportant des moyens de réglage de la clavette en position par rapport à la cale.

## Claims

1. A structure for holding a bodywork part, the structure being made up of assembled-together members and at least one auxiliary element (2, 3, 4, 5), **characterized in that** at least one of the members is a tubular beam (1) provided on the outside with at least one spline (7) extending longitudinally and including at least one flank (9') arranged to constitute a positioning reference for the auxiliary element (2, 3, 4, 5), the auxiliary element having a soleplate (22, 36) provided with means (13, 16, 24) for fixing it to the beam, said means including a bearing face (27, 40) for pressing against the reference flank (9') and presser means (28) for pressing the bearing face against the reference flank.

2. A structure according to claim 1, **characterized in that** the beam (1) has a plurality of splines (7) that are angularly distributed regularly around the beam.

3. A structure according to claim 2, **characterized in that** the beam (1) presents a section that is substantially circular and symmetrical about at least one diameter thereof.

4. A structure according to claim 1, **characterized in that** the bearing face is formed by a side wall (27, 40) of a groove (25, 38) formed in the auxiliary element (2, 3, 4, 5) for receiving the spline, and **in that** the presser means comprise at least one wedging device (28) for inserting between the flank (10') of the spline (7') that is opposite from the reference flank (9') and the facing side wall (26, 39) of the groove (27, 40).

5. A structure according to claim 4, **characterized in that** the wedging device (28) comprises a chock (29) and at least one sloping wedge (30) disposed so that the slope (34) of the wedge co-operates with a corresponding ramp (32) of the chock, and **in that** the chock and the wedge present two parallel opposite faces (31, 33) for bearing one against the flank (10') of the spline (7') opposite from the reference flank (9') and the other for bearing against the facing side wall (26, 39) of the groove (25, 38), the wedge being mounted to slide relative to the chock and the wedging device including means for adjusting the position of the wedge relative to the chock.

6. A structure according to any one of claims 1 to 5, **characterized in that** the fixing means include at least one screw (24) for engaging in a tapped hole (12) formed in the spline (7) in a radial direction of the beam.

7. A structure according to any one of claims 1 to 6, **characterized in that** the beam (1) has a plurality of splines (7), and the soleplate (22, 36, 40) of the auxiliary element bears against at least two splines.

8. A structure according to claim 7, **characterized in that** the soleplate (22, 36, 40) extends over an angle of no more than 180°.

9. A structure according to any one of claims 1 to 8, **characterized in that** the auxiliary element is arranged to connect two beams (1) together at a predetermined angle.

10. A drilling template (100) for a beam (1) according to any preceding claim, the template comprising a body (101) provided with means (100, 104) for releasably fixing it on the beam, and with at least one drilling bushing (103) arranged to extend over a spline (7) of the beam (1) when the template is in position on the beam, in that said means include a groove (105) which is formed in the body and which possesses a first side wall (107) forming a bearing face for pressing against a reference flank (9) of the spline (7), presser means for pressing the bearing face against the reference flank, the presser means comprising a wedging device received between a second flank (10) of the spline and a facing second side wall (106) of the groove.

11. A template according to claim 10, **characterized in that** the wedging device comprises a chock (29) and at least one sloped wedge (30) disposed so that the slope (34) of the wedge co-operates with a corresponding ramp (32) of the chock, and so that the chock and the wedge present two parallel opposite faces (31, 33) for bearing one against the second flank (10) of the spline (7) and the other against the second side wall (106) of the groove (105), the wedge being mounted to slide relative to the chock, and the wedging member including means for adjusting the position of the wedge relative to the chock.

## Patentansprüche

1. Struktur zum Halten eines Karosserieteils, wobei diese Struktur aus aneinander gefügten Gurten und mindestens einem Hilfselement (2, 3, 4, 5) gebildet ist, **dadurch gekennzeichnet, dass** mindestens einer der Gurte ein rohrförmiger Träger (1) ist, der außen mit mindestens einer Rippe (7) versehen ist, die sich in Längsrichtung erstreckt und mindestens eine Flanke (9') umfasst, die so angeordnet ist, dass sie einen Bezugspunkt für die Positionierung des Hilfselements (2, 3, 4, 5) bildet, wobei das Hilfselement eine Auflageplatte (22, 36) hat, die mit Mitteln (13, 16, 24) für ihre Befestigung am Träger versehen ist, wobei diese Mittel eine Anlagefläche (27, 40) zur Anlage an der Bezugsflanke (9') sowie Mittel (28) zur Anlage der Anlagefläche an der Bezugsflanke umfassen.

2. Struktur nach Anspruch 1, **dadurch gekennzeichnet, dass** der Träger (1) eine Vielzahl von Rippen (7) umfasst, die in gleichmäßigen Winkelabständen um den Träger herum verteilt sind.

3. Struktur nach Anspruch 2, **dadurch gekennzeichnet, dass** der Träger (1) einen im wesentlichen kreisförmigen Querschnitt aufweist, der in Bezug auf mindestens einen Durchmesser desselben symmetrisch ist.

4. Struktur nach Anspruch 1, **dadurch gekennzeichnet, dass** die Anlagefläche aus einer Seitenwand (27, 40) einer Nut (25, 38) gebildet ist, die in dem Hilfselement (2, 3, 4, 5) ausgebildet ist, um die Rippe aufzunehmen, und dass die Anlagemittel mindestens eine Klemmvorrichtung (28) umfassen, die dazu bestimmt ist, zwischen die Flanke (10') der Rippe (7'), die der Bezugsflanke (9') abgewandt ist, und der gegenüberliegenden Seitenwand (26, 39) der Nut (27, 40) eingefügt zu werden.

5. Struktur nach Anspruch 4, **dadurch gekennzeichnet, dass** die Klemmvorrichtung (28) einen Klemmklotz (29) und mindestens einen Keil (30) mit Schräge umfasst, der so angeordnet ist, dass die Schräge (34) des Keils mit einer entsprechenden Rampe (32) des Klemmklotzes zusammenwirkt, und dass der Klemmklotz und der Keil zwei parallele, einander abgewandte Flächen (31, 33) aufweisen, von denen die eine dazu bestimmt ist, an der Flanke (10) der Rippe (7) zur Anlage zu kommen, die der Bezugsflanke (9') abgewandt ist, und die andere dazu bestimmt ist, an der gegenüberliegenden Seitenwand (26, 39) der Nut (25, 38) zur Anlage zu kommen, wobei der Keil relativ zum Klemmklotz verschiebbar gelagert ist und die Klemmvorrichtung Mittel umfasst, um den Keil in seiner Position relativ zum Klemmklotz zu verstellen.

6. Struktur nach einem der Ansprüche 1 bis 5, **dadurch gekennzeichnet, dass** die Befestigungsmittel mindestens eine Schraube (24) umfassen, die dazu bestimmt ist, mit einem Innengewinde (12) in Eingriff gebracht zu werden, das in der Rippe (7) in radialer Richtung des Trägers ausgebildet ist.

7. Struktur nach einem der vorhergehenden Ansprüche 1 bis 6, **dadurch gekennzeichnet, dass**, da der Träger (1) mehrere Rippen (7) aufweist, die Auflageplatte (22, 36, 40) des Hilfselements an mindestens zwei Rippen anliegt.

8. Struktur nach Anspruch 7, **dadurch gekennzeichnet, dass** sich die Auflageplatte (22, 36, 40) über einen Winkel von allerhöchstens 180° erstreckt.

9. Struktur nach einem der Ansprüche 1 bis 8, **dadurch gekennzeichnet, dass** das Hilfselement derart angeordnet ist, dass es zwei Träger (1) in einem vorgegebenen Winkel zueinander verbindet.

10. Bohrlehre (100) für einen Träger (1) einer Haltestruktur nach einem der vorhergehenden Ansprüche, umfassend einen Körper (101), der mit Mitteln für seine lösbare Befestigung (100, 104) an dem Träger (1) und mit mindestens einer Bohrhülse (103) versehen ist, die derart angeordnet ist, dass sie sich senkrecht zu einer Rippe (7) des Trägers (1) erstreckt, wenn die Bohrlehre in ihrer Position am Träger ist, und dass diese Mittel eine Nut (105) umfassen, die in dem Körper ausgebildet ist und eine erste Seitenwand (107) hat, die eine Anlagefläche zur Anlage an einer Bezugsflanke (9) der Rippe (7) bildet, sowie Anlagemittel zur Anlage der Anlagefläche an der Bezugsflanke, die eine Klemmvorrichtung umfassen, die zwischen einer zweiten Flanke (10) der Rippe und einer gegenüberliegenden zweiten Seitenwand (106) der Nut aufgenommen ist.

11. Bohrlehre nach Anspruch 10, **dadurch gekennzeichnet, dass** die Klemmvorrichtung einen Klemmklotz (29) und mindestens einen Keil (30) mit Schräge umfasst, der so angeordnet ist, dass die Schräge (34) des Keils mit einer entsprechenden Rampe (32) des Klemmklotzes zusammenwirkt, und dass der Klemmklotz und der Keil zwei parallele, einander abgewandte Flächen (31, 33) aufweisen, von denen die eine dazu bestimmt ist, an der zweiten Flanke (10) der Rippe (7) zur Anlage zu kommen, und die andere dazu bestimmt ist, an der zweiten Seitenwand (106) der Nut (105) zur Anlage zu kommen, wobei der Keil relativ zum Klemmklotz verschiebbar gelagert ist und die Klemmvorrichtung Mittel umfasst, um den Keil in seiner Position relativ zum Klemmklotz zu verstellen.
